# EUROPEAN PATENT APPLICATION

(11) **EP 4 683 073 A1**
(43) Date of publication of application: **21.01.2026**
(21) Application number: 25178283.5
(22) Date of filing: 22.05.2025
(51) Int. Cl.: H01M 50/244, H01M 50/247, H01M 50/264

(54) **AUTOMATIC BATTERY EJECTION DEVICE**

(30) Priority: 17.07.2024 TW 113126804
(71) Applicant: Arcadyan Technology Corporation, Hsinchu City 30071 (TW)
(72) Inventor: Tsai, Ming-Hsun, 30071 Hsinchu City (TW); Liou, Te-Hsun, 30071 Hsinchu City (TW)
(74) Representative: Stevens Hewlett & Perkins

(57) **Abstract**

An automatic battery ejection device includes a main body, a push plate, a battery and a plurality of first elastic members. The push plate is disposed in the main body and includes a button and at least one first hook. The battery is disposed in the main body and includes at least one second hook, and the first hook engages with the second hook for connecting the push plate and the battery. The first elastic members are disposed in the main body, penetrated through the push plate, and compressed by the battery. Wherein when the button is pressed, the push plate is moved with respect to the main body toward a first direction, so that the first hook is separated from the second hook, and the first elastic members simultaneously push the battery toward a second direction with their elasticity, the first direction is perpendicular to the second direction.

## Description

### CROSS-REFERENCE TO RELATED APPLICATION

This application claims the priority of Taiwanese patent application No. 113126804, filed on July 17, 2024, which is incorporated herewith by reference.

### BACKGROUND OF THE INVENTION

### 1. Field of the Invention

The present invention relates generally to an automatic batter ejection device.

### 2. The Prior Arts

Electronic devices usually have a battery slot, a battery is placed in the battery slot, and the battery can supply power to the electronic devices. In order to prevent the battery from leaving the battery slot, a cover is generally installed on the surface of the battery slot. The cover may be embedded in the battery slot with a buckle structure, or the cover may be locked on the battery slot using screws. Regardless of the fixing method used, users must first open the cover and manually take out the battery, which may cause inconvenience.

### SUMMARY OF THE INVENTION

A primary objective of the present invention is to provide an automatic battery ejection device for ejecting a battery, wherein the device can first release the fixation between a push plate and the battery, and then automatically eject the battery.

In order to achieve the aforementioned objective, the present invention provides an automatic battery ejection device, which includes a main body, a push plate, a battery and a plurality of first elastic members; the push plate is disposed in the main body and includes a button and a first hook; the battery is disposed in the main body and includes a second hook, and the first hook engages with the second hook; the plurality of first elastic members is disposed in the main body, penetrates the push plate, and is compressed by the battery; when the button is pressed, the push plate moves relative to the main body in a first direction, causing the first hook to disengage from the second hook, and the plurality of first elastic members simultaneously push the battery to move in a second direction by the elastic force. The first direction is perpendicular to the second direction.

In some embodiments, the main body includes a battery holder; the battery holder includes a plurality of slide rails, a through hole and a plurality of via holes, and the battery is disposed in the battery holder. The push plate includes a side plate and a bottom plate. The side plate includes a button, and two sides of the bottom plate are respectively disposed on the plurality of slide rails, enabling the bottom plate can move along the plurality of slide rails; the bottom plate includes a first hook and a plurality of perforations; the first hook passes through the through hole, and the plurality of first elastic members passes through the plurality of via holes and the plurality of perforations respectively.

In some embodiments, the main body includes a side cover, the side cover is located on one side of the battery holder and includes a press button hole, the side plate is located between the side cover and one side of the battery holder, and the press button is located in the press button hole.

In some embodiments, the side cover includes a bump, the bump is located on the inside of the side cover and surrounds the outside of the press button hole, the side plate includes a blocking portion, the blocking portion surrounds the outside of the press button and is located on the side of the bump.

In some embodiments, the side plate includes a convex portion, and the convex portion is arranged around the outside of the blocking portion; the press button, the blocking portion, and the convex portion together form a groove, and the convex portion is located in the groove and can move along the groove.

In some embodiments, the battery automatic ejection device further includes a second elastic member, one end of the second elastic member contacts the main body, and the other end of the second elastic member contacts the press button, wherein when the press button is pressed, the second elastic member is compressed by the press button.

In some embodiments, before the button is pressed, the second elastic member drives the push plate to move in the opposite direction to the first direction by means of the elastic force, until the first hook hooks the second hook, thereby the battery being installed in the main body.

In some embodiments, the main body includes a battery holder, one side of the battery holder includes a protruding column, and the second elastic member is disposed on the protruding column.

In some embodiments, the main body includes a bottom cover, the bottom cover includes a plurality of pillars, and a plurality of first elastic members is respectively disposed on the plurality of pillars.

In some embodiments, the bottom of the battery includes an accommodation groove, and the second hook is protruding in the accommodation groove. Before the press button is pressed, the first hook is positioned within the accommodation groove.

The effect of the present invention is that the user can first move the push plate by pressing the press button to release the fixation between the push plate and the battery, and then use the elastic force of the plurality of compressed first elastic members to push the battery out of the main body. As such, the user can easily take out the battery with less effort.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a perspective view of the first embodiment of the present invention.
FIG. 2 is an exploded view of the first embodiment of the present invention.
FIG. 3 is a perspective view of the battery holder of the present invention.
FIG. 4 is a perspective view of the battery of the present invention.
FIG. 5 is a cross-sectional view taken along line V-V in FIG. 1.
FIG. 6 is a cross-sectional view taken along line VI-VI in FIG. 1.
FIG. 7 is a perspective view of the first embodiment of the present invention with the bottom cover removed.
FIG. 8 is a schematic view of the push plate of the present invention moving in the first direction with respect to the main body.
FIG. 9 is a schematic view of the first hook disengaging from the second hook of the present invention.
FIG. 10 is a schematic view of the push plate of the present invention moving along the slide rail.
FIG. 11 is a schematic view of the battery of the present invention being pushed out in the second direction by the first elastic member.
FIG. 12 is a schematic view of the second elastic member driving the push plate in the opposite direction to the second direction of the present invention.
FIG. 13 is a schematic view of the push plate of the present invention being reset and the first hook hooking the second hook.
FIG. 14 is a cross-sectional view of the press button and surroundings according to the second embodiment of the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

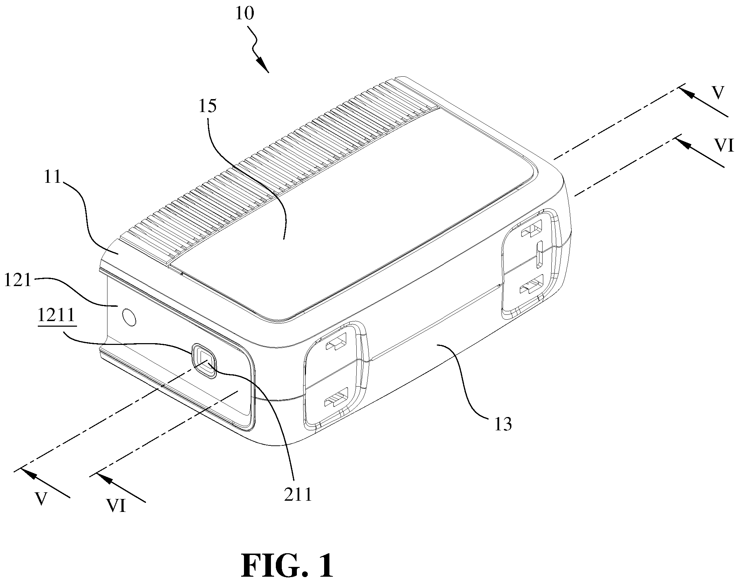

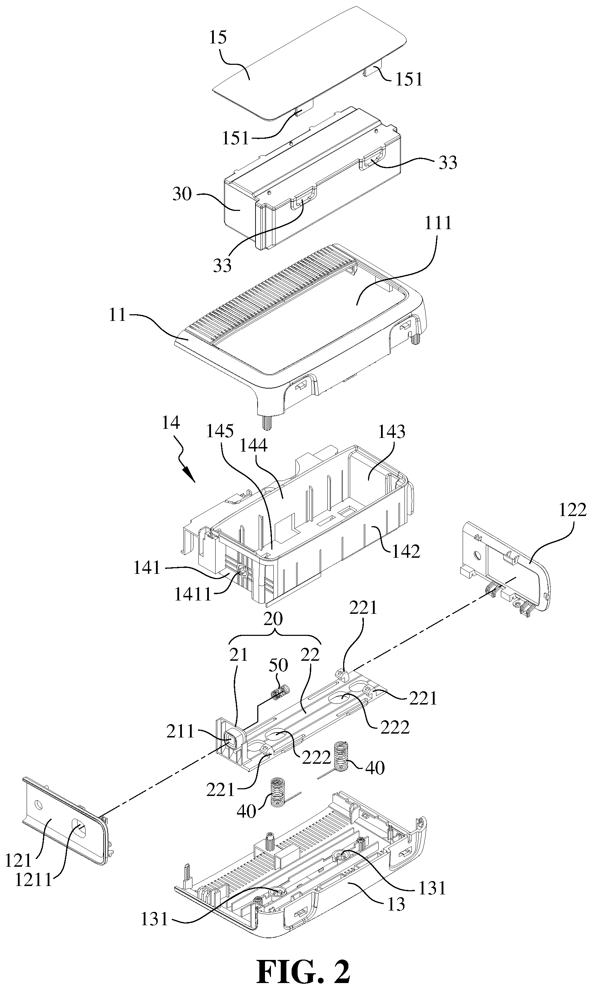

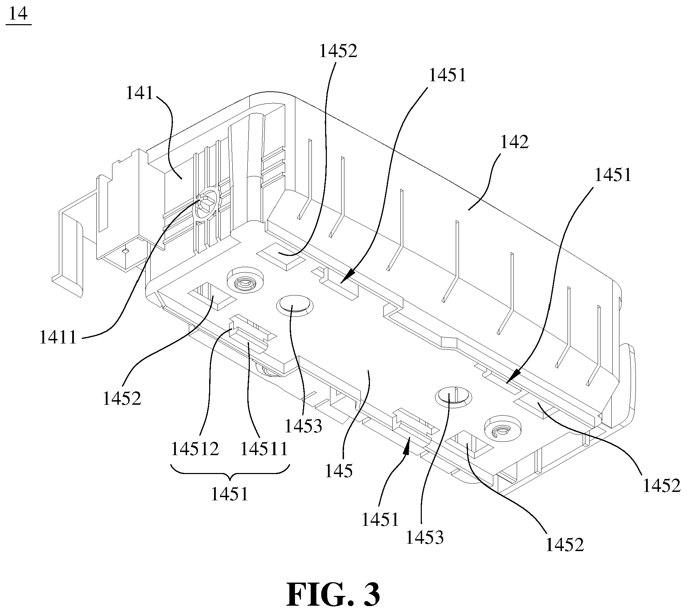

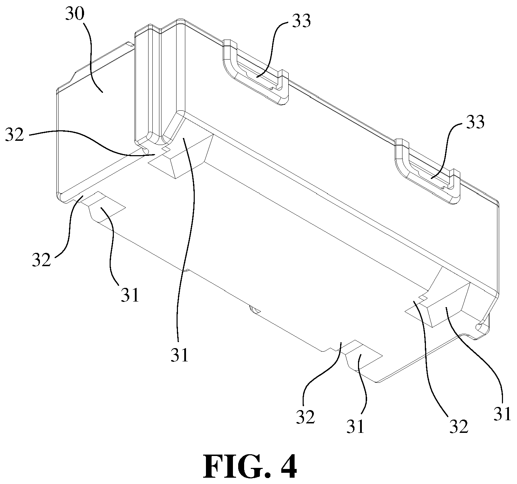

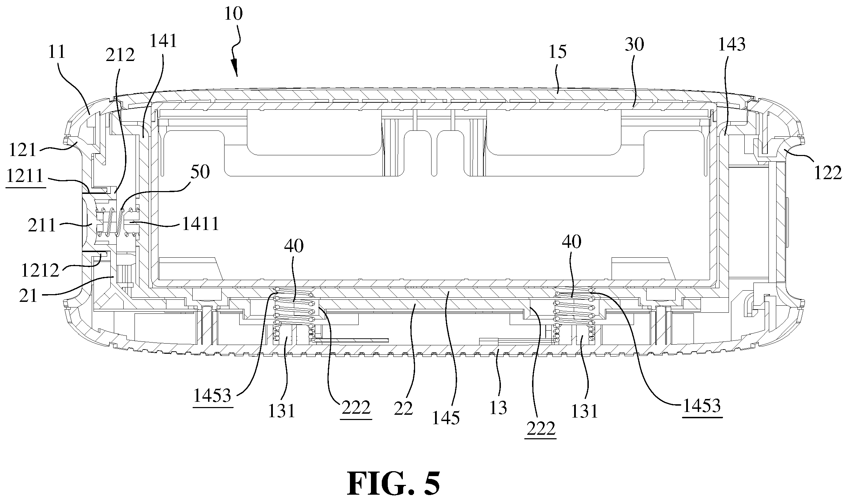

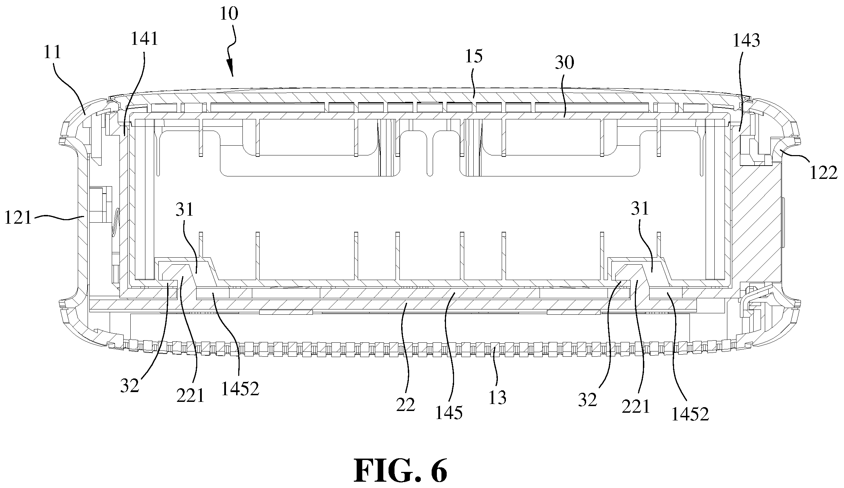

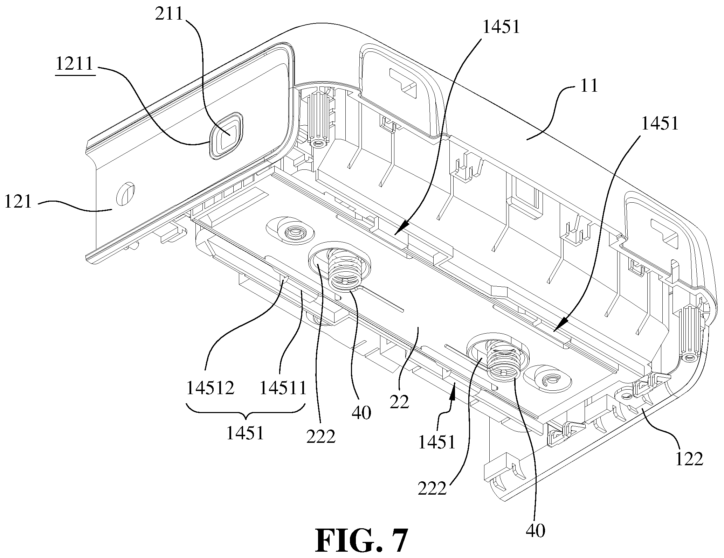

Referring to FIGS. 1-7, FIG. 1 is a perspective view of the first embodiment of the present invention, FIG. 2 is an exploded view of the first embodiment of the present invention, FIG. 3 is a perspective view of the battery holder of the present invention, FIG. 4 is a perspective view of the battery of the present invention, FIG. 5 is a cross-sectional view taken along line V-V in FIG. 1, FIG. 6 is a cross-sectional view taken along line VI-VI in FIG. 1, and FIG. 7 is a perspective view of the first embodiment of the present invention with the bottom cover removed. The present invention provides an automatic battery ejection device, which includes a main body 10, a push plate 20, a battery 30, a plurality of first elastic members 40, and a second elastic member 50.

As shown in FIGS. 1, 2 and 5, the main body 10 includes an upper cover 11, two side covers 121, 122, a bottom cover 13, a battery holder 14, and a battery cover 15. The upper cover 11, the side covers 121, 122 and the bottom cover 13 together form a chamber. The bottom cover 13 includes a plurality of pillars 131. The battery holder 14 is located in the chamber. The battery cover 15 closes the opening 111 of the upper cover 11. In other words, the upper cover 11 is located above the battery holder 14, the side covers 121 and 122 are respectively located on two sides of the battery holder 14, and the bottom cover 13 is located below the battery holder 14. The side cover 121 includes a press button hole 1211 and a bump 1212. The bump 1212 is located inside the side cover 121 and surrounds the outside of the press button hole 1211. As shown in FIGS. 2, 3 and 5, the battery holder 14 includes a plurality of side walls 141-144 and a bottom wall 145. The plurality of side walls 141-144 and the bottom wall 145 together form a cavity. The side wall 141 includes a protruding column 1411 on the outside. The bottom of the bottom wall 145 includes a plurality of slide rails 1451, a plurality of through holes 1452 and a plurality of via holes 1453. The plurality of slide rails 1451 is close to both sides of the bottom wall 145. Each slide rail 1451 is in an L shape and includes a bottom part 14511 and a side part 14512.

As shown in FIGS. 1, 2, 5, 6 and 7, the push plate 20 includes a side plate 21 and a bottom plate 22. The side plate 21 is located between the side cover 121 and one side of the side wall 141. The side plate 21 includes a press button 211 and a blocking portion 212. The press button 211 is located in the press button hole 1211. The blocking portion 212 is arranged around the outside of the press button 211 and is located on one side of the bump 1212. The two sides of the bottom plate 22 are respectively arranged on the bottom part 14511 of the plurality of slide rails 1451, so that the bottom plate 22 can move along the bottom part 14511 of the plurality of slide rails 1451. The top of the bottom plate 22 includes a plurality of first hooks 221 and a plurality of perforations 222. The plurality of first hooks 221 passes through the plurality of through holes 1452 respectively.

As shown in FIGS. 2, 4 and 5, the battery 30 is disposed in the cavity of the battery holder 14. The bottom of the battery 30 includes a plurality of accommodation grooves 31 and a plurality of second hooks 32. Each of the second hooks 32 is disposed to protrude from the bottom of each of the accommodation grooves 31. The two first engaging portions 151 of the battery cover 15 are embedded in the two second engaging portions 33 of the battery 30 respectively. As shown in FIG. 6, before the press button 211 is pressed, each of the first hooks 221 is located in each of the accommodation grooves 31 and engages with each of the second hooks 32 respectively.

As shown in FIGS. 2, 5 and 7, the first elastic members 40 are respectively disposed on the plurality of pillars 131, pass through the plurality of perforations 222 and the plurality of via holes 1453 respectively and are compressed by the battery 30.

As shown in FIGS. 2 and 5, the second elastic member 50 is disposed on the protruding column 1411 and one end thereof contacts the press button 211.

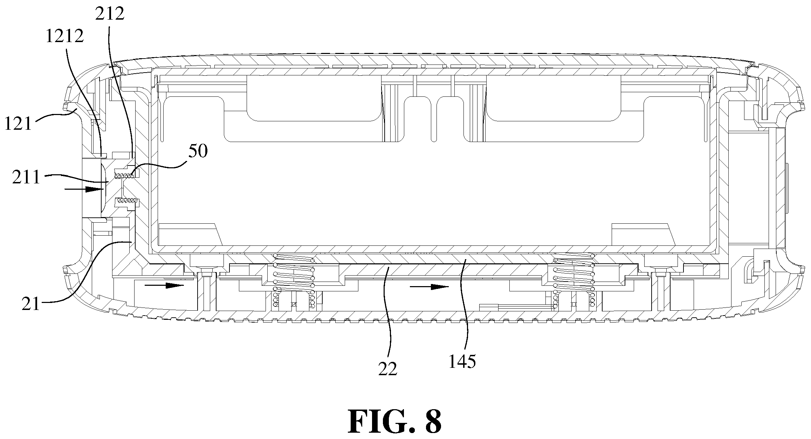

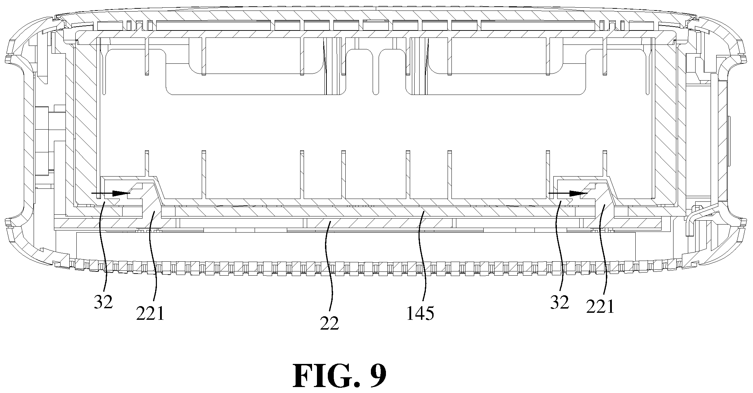

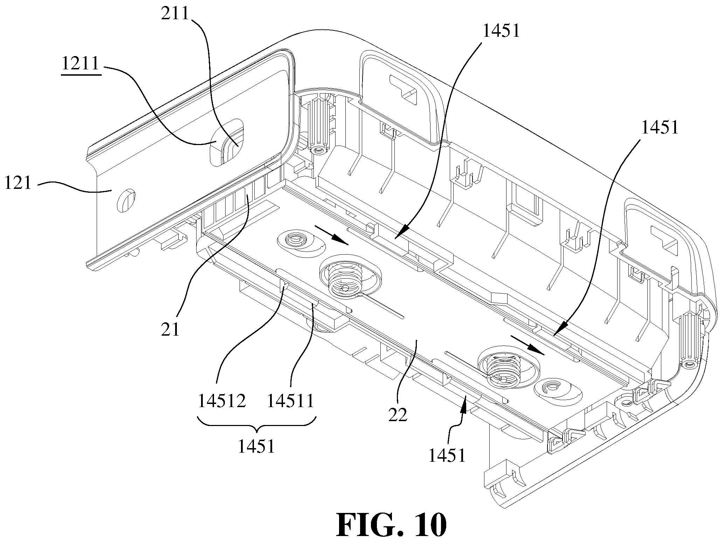

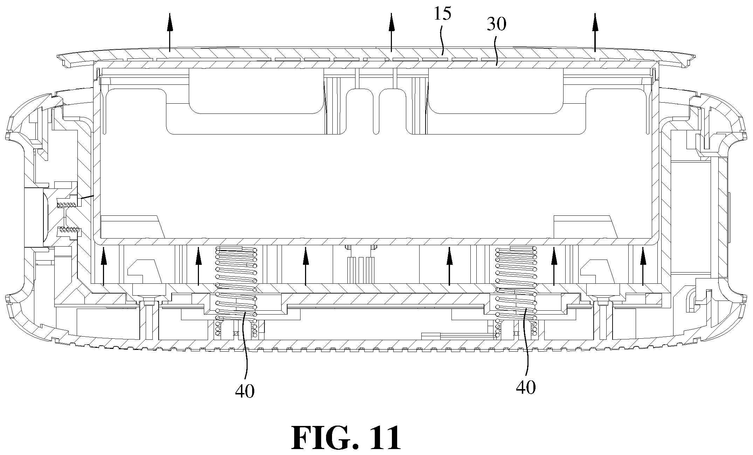

FIG. 8 is a schematic view of the push plate 20 of the present invention moving in the first direction with respect to the main body 10. FIG. 9 is a schematic view of the first hook 221 disengaging from the second hook 32 of the present invention. FIG. 10 is a schematic view of the push plate 20 of the present invention moving along the slide rail 1451. FIG. 11 is a schematic view of the battery 30 of the present invention being pushed out in the second direction by the first elastic members 40. As shown in FIGS. 8-11, when the press button 211 is pressed, the side plate 21 pushes the bottom plate 22 to move in a first direction along the bottom part 14511 of each of the slide rails 1451 with respect to the bottom wall 145. As a result, the plurality of first hooks 221 is disengaged from the plurality of second hooks 32, the blocking portion 212 moves away from the bump 1212, and the second elastic member 50 is compressed by the press button 211. Simultaneously, the plurality of first elastic members 40 drives the battery 30 and the battery cover 15 in a second direction through elastic force for ejection. The first direction is perpendicular to the second direction.

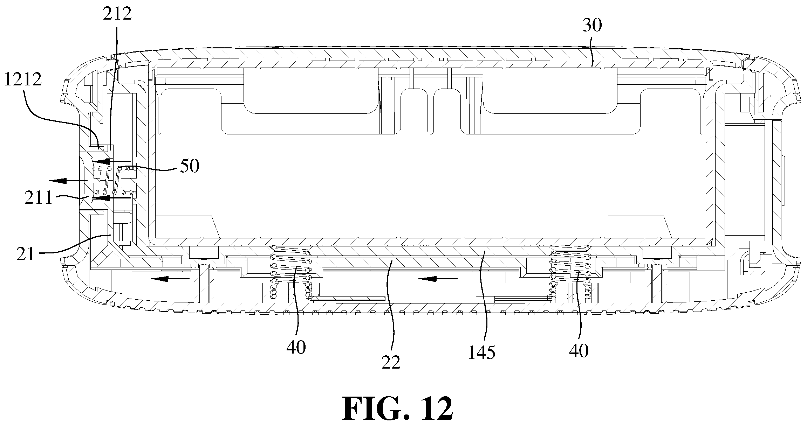

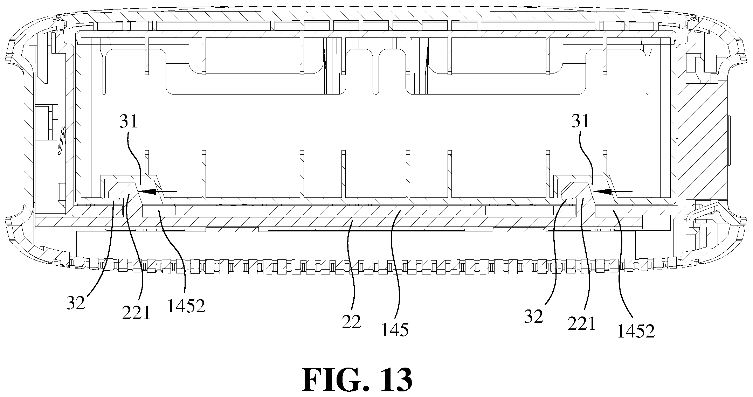

FIG. 12 is a schematic view of the second elastic member 50 of the present invention driving the push plate 20 in the opposite direction to the second direction. FIG. 13 is a schematic view of the push plate 20 of the present invention being reset and the first hook 221 engaging with the second hook 32. As shown in FIGS. 12 and 13, before the press button 211 is pressed (that is, when the battery 30 is installed in the cavity of the battery holder 14 of the main body 10), the plurality of first hooks 221 passes through the plurality of through holes 1452 respectively and enters the plurality of accommodation grooves 31. The second elastic member 50 drives the side plate 21 to move in the opposite direction to the first direction through elastic force of the second elastic member 50. The side plate 21 pushes the bottom plate 22 to move, relative to the bottom wall 145, along the bottom part 14511 of each of the plurality of slide rails 1451 in a direction opposite to the first direction until the plurality of first hooks 221 respectively engages with the plurality of second hooks 32. At this time, the battery 30 compresses the plurality of first elastic members 40 again, and the blocking portion 212 approaches to the bump 1212, allowing the battery 30 to be installed in the main body 10.

As such, the user can first move the push plate 20 by pressing the press button 211 to release the fixation between the push plate 20 and the battery 30, and then the battery 30 can be ejected automatically by the elastic force of the compressed first elastic members 40. The user can thus take out the battery 30 with less effort.

Furthermore, the plurality of first elastic members 40 can provide a relatively uniform elastic force to automatically eject the battery 30, thereby preventing from the battery 30 from becoming skewed during the ejection process.

In addition, the elastic force of the compressed second elastic member 50 can automatically reset the push plate 20 and fix the battery 30 on the push plate 20 with less effort.

In addition, the bottom parts 14511 of the plurality of slide rails 1451 can provide the bottom plate 22 with smooth movement, and the side parts 14512 of the plurality of slide rails 1451 can prevent the bottom plate 22 from deflecting outward.

In addition, each accommodation groove 31 can accommodate each first hook 221, so each second hook 32 is not necessary to protrude downward from the bottom of the battery 30, which can effectively reduce the overall volume, making the present invention occupy less space.

In addition, the blocking portion 212 and the bump 1212 can prevent the press button 211 from protruding too far from the press button hole 1211.

It is worth mentioning that the plurality of pillars 131 can fix the plurality of first elastic members 40, and the protruding column 1411 can fix the second elastic member 50 to prevent the positions of the plurality of first elastic members 40 and the second elastic member 50 from becoming offset.

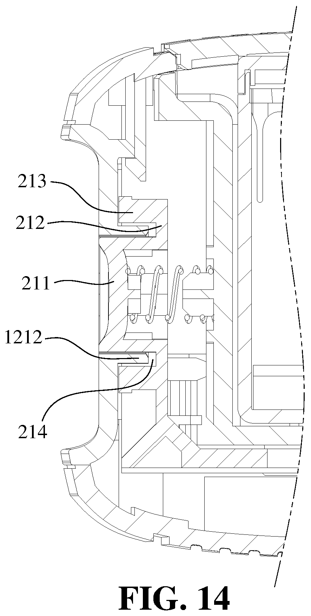

FIG. 14 is a cross-sectional view of the press button 211 and surroundings according to the second embodiment of the present invention. As shown in FIG. 14, the difference between the second embodiment and the first embodiment is that the side plate 21 includes a convex portion 213, and the convex portion 213 is arranged around the outside of the blocking portion 212. The press button 211, the blocking portion 212 and the convex portion 213 together form a groove 214 in which the bump 1212 is located and can move along the groove 214. When the press button 211 is pressed, the bump 1212 can be retained in the groove 214 so that the press button 211 can stably move in the first direction and the opposite direction of the first direction without shaking. Furthermore, the convex portion 213 can prevent the press button 211 from protruding too far from the press button hole 1211.

Although the present invention has been described with reference to the preferred embodiments thereof, it is apparent to those skilled in the art that a variety of modifications and changes may be made without departing from the scope of the present invention which is intended to be defined by the appended claims.

## Claims

1. An automatic battery ejection device, comprising:
a main body;
a push plate, disposed in the main body and having a button and a first hook;
a battery, disposed in the main body and having a second hook, and the first hook engaging with the second hook; and
a plurality of first elastic members, disposed in the main body, penetrating the push plate, and compressed by the battery;
wherein, when the button is pressed, the push plate moves with respect to the main body in a first direction, so that the first hook is separated from the second hook, and the plurality of first elastic members simultaneously push the battery to move in a second direction through the elastic force; the first direction is perpendicular to the second direction.

2. The automatic battery ejection device according to claim 1, wherein the main body includes a battery holder; the battery holder includes a plurality of slide rails, a through hole and a plurality of via holes, and the battery is disposed in the battery holder; the push plate includes a side plate and a bottom plate; the side plate includes a button, and two sides of the bottom plate are respectively disposed on a plurality of slide rails so that the bottom plate can move along the plurality of slide rails; the bottom plate includes a first hook and a plurality of perforations; the first hook passes through the through hole, and the plurality of first elastic members pass through the plurality of via holes and the plurality of perforations respectively.

3. The automatic battery ejection device according to claim 2, wherein the main body includes a side cover, the side cover is located on one side of the battery holder and includes a press button hole, the side plate is located between the side cover and one side of the battery holder, and the press button is located in the press button hole.

4. The automatic battery ejection device according to claim 3, wherein the side cover includes a bump, the bump is located on the inside of the side cover and surrounds the outside of the press button hole, the side plate includes a blocking portion, the blocking portion surrounds the outside of the press button and is located on the side of the bump.

5. The automatic battery ejection device according to claim 4, wherein the side plate includes a convex portion, and the convex portion is arranged around the outside of the blocking portion; the press button, the blocking portion, and the convex portion together form a groove, and the convex portion is located in the groove and can move along the groove.

6. The automatic battery ejection device according to claim 1, further comprising a second elastic member, one end of the second elastic member in contact with the main body, and the other end of the second elastic member in contact with the press button, wherein when the press button is pressed, the second elastic member is compressed by the press button.

7. The automatic battery ejection device according to claim 6, wherein before the button is pressed, the second elastic member drives the push plate to move in the opposite direction to the first direction through the elastic force until the first hook engages with the second hook, so that the battery is installed in the main body.

8. The automatic battery ejection device according to claim 6, wherein the main body includes a battery holder, one side of the battery holder includes a protruding column, and the second elastic member is disposed on the protruding column.

9. The automatic battery ejection device according to claim 1, wherein the main body includes a bottom cover, the bottom cover includes a plurality of pillars, and a plurality of first elastic members are respectively disposed on the plurality of pillars.

10. The automatic battery ejection device according to claim 1, wherein the bottom of the battery includes an accommodation groove, and the second hook is protruding in the accommodation groove; before the press button is pressed, the first hook is located in the accommodation groove.
